Europäisches Patentamt

European Patent Office

Office européen des brevets

(19)

(11) Veröffentlichungsnummer: **0 083 766**
B1

(12) EUROPÄISCHE PATENTSCHRIFT

(45) Veröffentlichungstag der Patentschrift:
17.04.85

(51) Int. Cl.⁴: **B 29 C 45/40**

(21) Anmeldenummer: 82111708.2

(22) Anmeldetag: 16.12.82

(54) Spritzgusswerkzeug mit Entnahmevorrichtung.

(30) Priorität: 07.01.82 DE 8200184 U

(43) Veröffentlichungstag der Anmeldung:
20.07.83 Patentblatt 83/29

(45) Bekanntmachung des Hinweises auf die Patenterteilung:
17.04.85 Patentblatt 85/16

(84) Benannte Vertragsstaaten:
AT CH DE FR IT LI

(56) Entgegenhaltungen:
CH - A - 566 198
DE - A - 2 414 741
GB - A - 1 589 079
US - A - 4 204 824

(73) Patentinhaber: BASF Aktiengesellschaft,
Carl-Bosch-Strasse 38, D-6700 Ludwigshafen (DE)

(72) Erfinder: Schmidts, Kurt, Kornstrasse 10, D-7640 Kehl
(DE)
Erfinder: Schuett, Walter, Linxer Strasse 29, D-7640 Kehl
(DE)
Erfinder: Zeysolff, Edmond, 238A, Rue Principale,
F-67210 Meistratzheim (FR)
Erfinder: Saumer, Wilhelm, Martin-Luther-Strasse 53,
D-7830 Emmendingen (DE)

## Beschreibung

Die Erfindung bezieht sich auf ein Spritzgußwerkzeug mit einer feststehenden und einer bewegbaren Formhälfte sowie mit einer mit der bewegbaren Formhälfte in Verbindung stehenden Entnahmevorrichtung für die Formteile, bestehend aus einem oder mehreren mittels einer Halteplatte in einem Schienenpaar geführten Greifwerkzeugen, einer Montageplatte für das Schienenpaar, einem auf der Montageplatte drehbar gehaltenen und auf einer Zahnstange, die wahlweise mit der festehenden Formhälfte oder mit der Montageplatte fest verbindbar ist, abrollbaren Zahnrad sowie aus einer kinematischen Kette, welche die Drehbewegung des Zahnrades in eine geradlinige Bewegung der Halteplatte für die Greifwerkzeuge überträgt.

In der deutschen Gebrauchsmusterschrift 7 904 564 ist ein Spritzgußwerkzeug beschrieben, bei dem ein Greifwerkzeug — gekoppelt mit der Öffnungsbewegung der bewegbaren Formhälfte — über die daraus zu entnehmenden Formteile fahrbar ist. Hierzu erfolgt der Antrieb des Greifwerkzeugs durch die bewegbare Formhälfte über eine Zahnrad/Zahnstangen-Anordnung, deren Zahnrad, welches in einem an der Formhälfte befestigten Gestell gelagert ist, auf einer feststellbaren Zahnstange abläuft und dabei eine weitere mit dem Greifwerkzeug verbundene Zahnstange direkt antreibt. Infolge der schnellen Öffnungs- und Schließbewegungen der bewegbaren Formhälfte wirken dabei auf das Greifwerkzeug hohe Beschleunigungskräfte, die schnellen Verschleiß oder gar Beschädigungen desselben verursachen können.

Es stellte sich daher die Aufgabe, ein Spritzgußwerkzeug mit einer Entnahmevorrichtung zu entwickeln, bei dem die Bewegungsübertragung von der bewegbaren Formhälfte auf die Entnahmevorrichtung möglichst schonend erfolgt.

Die Aufgabe wurde durch ein Spritzgußwerkzeug der eingangs geschilderten Art gelöst, bei dem zur Bildung der kinematischen Kette zwischen diesem und der Entnahmevorrichtung das Zahnrad mit einer Kurbel und diese wiederum über eine angelenkte Schubstange mit einer zum Antrieb eines weiteren Zahnrades als Zahnstange ausgebildeten Schwinge verbunden und die Welle dieses Zahnrades mit einem Kettentrieb gekoppelt ist, an dessen Transportkette die Halteplatte für die Greifwerkzeuge befestigt ist.

In einer vorteilhaften Ausführungsform des erfindungsgemäßen Spritzgußwerkzeuges sind die Greifwerkzeuge auf eine Trägeranordnung montiert, die zum Ablegen der Formteile auf ein der Entnahmevorrichtung zugeordnetes Förderband an einem an der Halteplatte befestigten Verbindungselement schwenkbar gelagert ist und deren Schwenkachse mit einem steuerbaren Antrieb verbunden ist.

Eine bevorzugte Ausgestaltung des Antriebs besteht darin, daß die Schwenkachse der Trägeranordnung ein Ritzel aufweist, das über eine Zahnstange von einem hydraulischen oder pneumatischen Arbeitszylinder antreibbar ist.

In Weiterbildung des Spritzgußwerkzeugs nach der Erfindung ist zur Schwenkbarkeit der Trägeranordnung für die Greifwerkzeuge in zwei Ebenen das Verbindungselement mittels eines koaxialen Drehzapfens in einer Hülse um seine Mittelachse drehbar gehalten, steht die Hülse über eine im rechten Winkel angeordnete und in einem Rohr geführte Welle mit einem Drehantrieb in Verbindung, wobei Rohr und Drehantrieb an der Halteplatte befestigt sind, und weist der Drehzapfen des Verbindungslementes ein Kegelrad auf, das auf einem entsprechenden am benachbarten Rohrende befestigten Kegelrad unter der Drehung der Welle abrollbar ist.

Weitere Einzelheiten und Vorteile des erfindungsgemäßen Spritzgußwerkzeugs sind in der nachfolgenden Beschreibung von in der Zeichnung dargestellten Ausführungsbeispielen enthalten.

Es zeigt

Fig. 1 das Spritzgußwerkzeug mit der Entnahmevorrichtung in einer schematischen Frontansicht,

Fig. 2 die Trägeranordnung für die Greifwerkzeuge in einer Draufsicht,

Fig. 3 die Entnahmevorrichtung in waagerechter Lage mit in zwei Ebenen schwenkbarer Trägeranordnung in einer Seitenansicht.

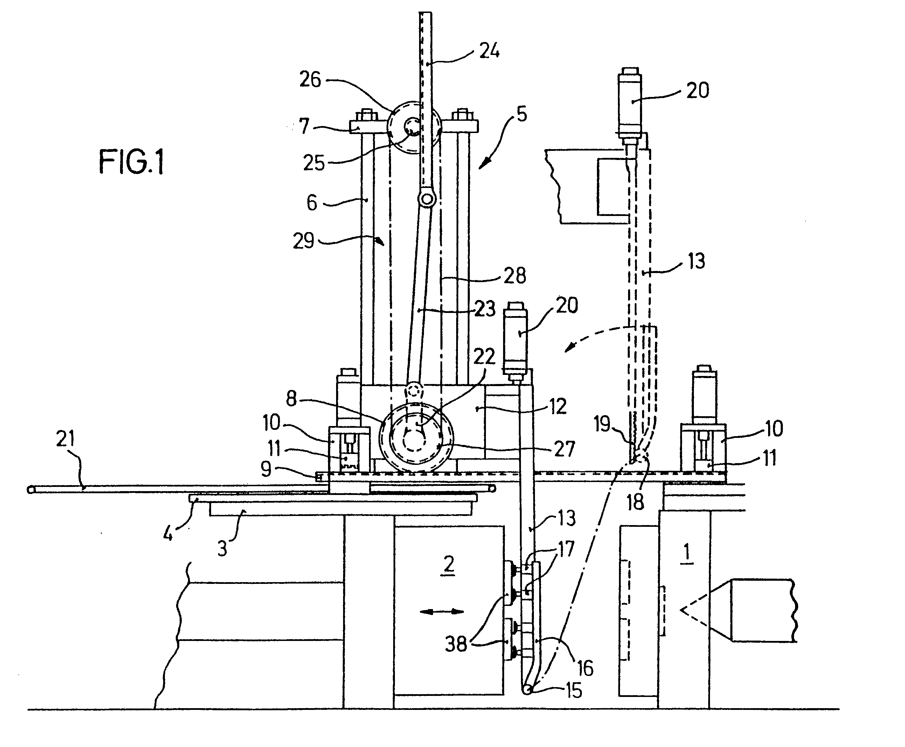

Das Spritzgußwerkzeug selbst besteht in üblicher Weise aus einer feststehenden Formhälfte 1 und einer bewegbaren Formhälfte 2, von denen die feststehende mit den Zuführungen (zeichnerisch nicht dargestellt) für die Kunststoffschmelze versehen ist (Fig. 1).

Die bewegbare Formhälfte ist mit waagrecht angeordneten Gleitschienen 3 ausgestattet, auf denen eine Montageplatte 4 für eine Vorrichtung 5 zur Entnahme der Formteile 38 verschieblich ruht und mittels Schrauben feststellbar ist. Die Verschieblichkeit ermöglicht eine optimale Einstellung der Entnahmevorrichtung in bezug auf die zu entnehmenden Formteile und eine bessere Zugänglichkeit bei Wartungsarbeiten. Auf der Montageplatte ist ein Schienenpaar 6 vertikal befestigt, das durch Traversen 7 miteinander verbunden ist. Die untere, in der Zeichnung nicht sichtbare Traverse nimmt ein Zahnrad 8 auf, welches auf einer Zahnstange 9 abrollen kann. Diese ist mit Hilfe hydraulisch oder pneumatisch betätigbarer Spannelemente 10, beispielsweise gezahnter Blöcke 11, wahlweise mit der feststehenden Formhälfte 1 oder der Montageplatte 4 fest verbindbar.

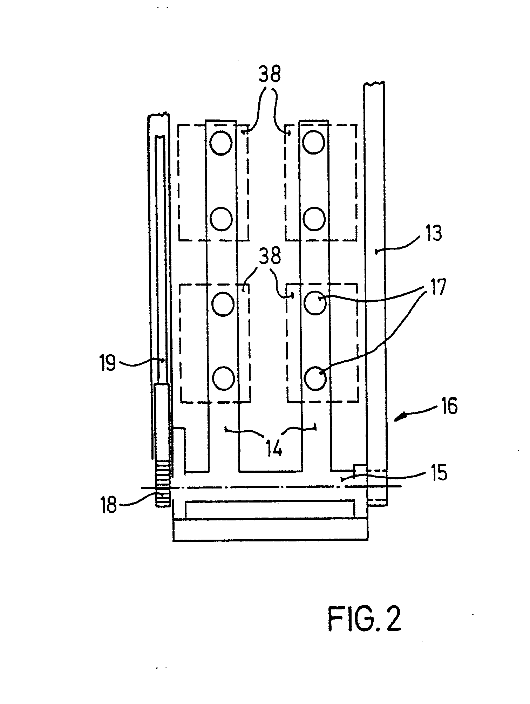

Es ist zu erkennen, daß die Formhälfte 2 bei ihrer Bewegung das Schienenpaar 6 mitnimmt und das Zahnrad 8 dabei auf der Zahnstange 9 abrollt, sofern diese an der stationären Formhälfte 1 festgelegt ist. Die Rotationsbewegung des Zahnrades wird über eine kinematische Kette auf eine Halteplatte 12 übertragen, an der über ein Verbindungselement 13 eine aus Stegen 14 — ausgehend von einem Drehteil 15 — gebildete Trägeranordnung 16 befestigt ist (Fig. 2). Diese nimmt Greifwerkzeuge 17, wie Spannzangen oder Vakuumsauger oder Klemm-Mechaniken, auf. Es ist vorteilhaft, die Trägeranordnung am Verbindungselement schwenkbar zu halten und über ein auf der Schwenkachse befestigtes Ritzel 18 und eine mit diesem kämmende Zahnstange 19 durch einen hydraulischen oder pneumatischen Arbeitszylinder 20 anzutreiben. Dadurch ist die Möglichkeit gegeben, die aus der Formhälfte 2 entnommenen Formteile auf ein der Entnahmevorrichtung zugeordnetes Förderband 21 abzulegen.

Die kinematische Kette zwischen dem Zahnrad 8 und den Greifwerkzeugen 17 stellt eine zwangsgesteuerte Kopplung zwischen der Öffnungsbewegung der Formhälfte 2 und dem Zufahren der Greifwerkzeuge zu den Formteilen her. Sie besteht aus einer mit dem Zahnrad drehfest verbundenen Kurbel 22, die über eine angelenkte Schubstange 23 auf eine als Zahnstange ausgebildete Schwinge 24 arbeitet.

Diese kämmt ein in der oberen Traverse 7 gelagertes Zahnrad 25, auf dessen Welle ein Kettenrad 26 befestigt ist. Um dieses und ein weiteres, in der unteren Traverse gehaltenes Kettenrad 27 ist eine Transportkette 28 geführt, an welcher die Halteplatte 12 für die Greifwerkzeuge 17 verankert ist, und zwar entsprechend dem geforderten Bewegungsablauf am linken Trum 29 der Kette.

Durch den Kurbelmechanismus entsteht ein sinusförmiger Bewegungsablauf der Entnahmevorrichtung, so daß für eine ausgeglichene Beschleunigung und Abbremsung der Vorrichtung gesorgt ist.

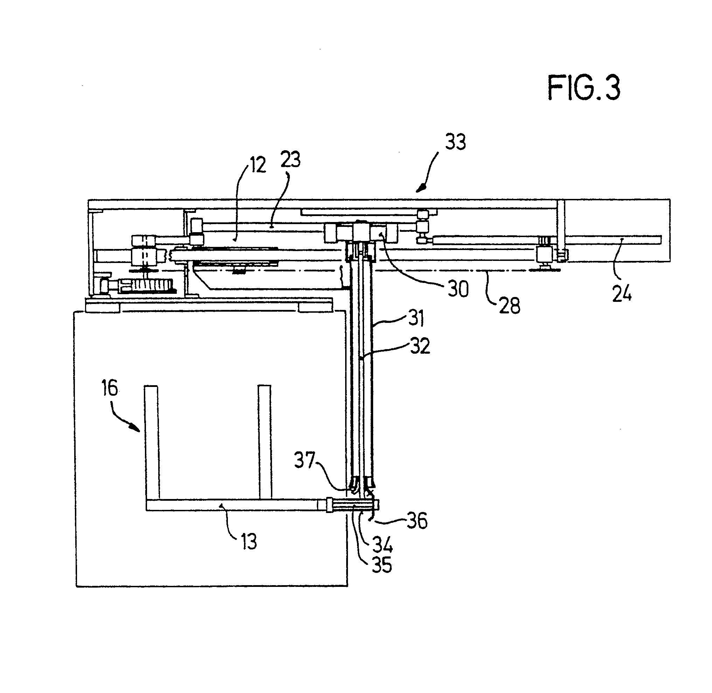

Eine weitergehende Ausgestaltung des vorstehend beschriebenen Spritzgußwerkzeugs besteht darin, daß die Trägeranordnung 16 der Greifwerkzeuge 17 für eine Schwenkbarkeit in zwei Ebenen ausgebildet ist (Fig. 3). Damit soll eine beliebig wählbare Abgabeposition für die entnommenen Formteile sowie ein möglichst weites Freischwenken vom Maschinenbett der Spritzgußmaschine erreicht werden. Die Halteplatte 12 ist hierzu mit einem hydraulischen oder pneumatischen Drehantrieb 30 und mit einem daran anschließenden feststehenden Rohr 31 ausgestattet, in dem eine Welle 32 des Drehantriebs geführt ist — die kinematische Kette 33 ist hier horizontal angeordnet. Am freien Ende der Welle ist rechtwinklig eine Hülse 34 angebracht, in der das Verbindungselement 13 für die Trägeranordnung 16 mittels eines koaxialen Drehzapfens 35 drehbar gehalten ist. Der Drehzapfen weist an seinem über die Hülse 34 hinausragenden Ende ein Kegelrad 36 auf, das auf einem entsprechenden, am benachbarten Ende des Rohres 31 befestigten Kegelrad 37 abrollbar ist. Dreht nun der Antrieb 30 die Welle 32 und schwenkt damit über die daran befestigte Hülse 34 die Trägeranordnung 16 in einer Ebene, so rollt das Kegelrad 36 des Drehzapfens 35 zwangsläufig auf dem feststehenden Kegelrad 37 ab und schwenkt dabei die Trägeranordnung um die Mittelachse des Verbindungselements 13 in einer zweiten Ebene. Damit ist eine Abgabeposition für die Formteile außerhalb des unmittelbaren Maschenbereichs erreicht.

**Patentansprüche**

1. Spritzgußwerkzeug mit einer feststehenden und einer bewegbaren Formhälfte (1, 2) sowie mit einer mit der bewegbaren Formhälfte (2) in Verbindung stehenden Entnahmevorrichtung (5) für die Formteile (38), bestehend aus einem oder mehreren mittels einer Halteplatte (12) in einem Schienenpaar (6) geführten Greifwerkzeugen (17), einer Montageplatte (4) für das Schienenpaar, einem auf der Montageplatte drehbar gehaltenen und auf einer Zahnstange (9), die wahlweise mit der feststehenden Formhälfte oder mit der Montageplatte fest verbindbar ist, abrollbaren Zahnrad (8) sowie aus einer kinematischen Kette, welche die Drehbewegung des Zahnrades in eine geradlinige Bewegung der Halteplatte für die Greifwerkzeuge überträgt, dadurch gekennzeichnet, daß zur Bildung der kinematischen Kette das Zahnrad (8) mit einer Kurbel (22) und diese wiederum über eine angelenkte Schubstange (23) mit einer zum Antrieb eines weiteren Zahnrades (25) als Zahnstange ausgebildeten Schwinge (24) verbunden und die Welle dieses Zahnrades mit einem Kettentrieb (26, 27) gekoppelt ist, an dessen Transportkette (28) die Halteplatte (12) für die Greifwerkzeuge (17) befestigt ist.

2. Spritzgußwerkzeug nach Anspruch 1, dadurch gekennzeichnet, daß die Greifwerkzeuge (17) auf eine Trägeranordnung (16) montiert sind, die zum Ablegen der Formteile (38) auf ein der Entnahmevorrichtung (5) zugeordnetes Förderband (21) an einem an der Halteplatte (12) befestigten Verbindungselement (13) schwenkbar gelagert ist und deren Schwenkachse mit einem steuerbaren Antrieb verbunden ist.

3. Spritzgußwerkzeug nach Anspruch 2, dadurch gekennzeichnet, daß die Schwenkachse der Trägeranordnung (16) ein Ritzel (18) aufweist, das über eine Zahnstange (19) von einem hydraulischen oder pneumatischen Arbeitszylinder (20) antreibbar ist.

4. Spritzgußwerkzeug nach Anspruch 1 und 2, dadurch gekennzeichnet, daß zur Schwenkbarkeit der Trägeranordnung (16) für die Greifwerkzeuge (17) in zwei Ebenen das Verbindungselement (13) mittels eines koaxialen Drehzapfens (35) in einer Hülse (34) um seine Mittelachse drehbar gehalten ist, die Hülse über eine im rechten Winkel angeordnete und in einem Rohr (31) geführte Welle (32) mit einem Drehantrieb (30) in Verbindung steht, wobei Rohr und Drehantrieb an der Halteplatte (12) befestigt sind, und der Drehzapfen des Verbindungselements ein Kegelrad (36) aufweist, das auf einem entsprechenden am benachbarten Rohrende befestigten Kegelrad (37) unter der Drehung der Welle abrollbar ist.

## Claims

1. An injection mold comprising a fixed half (1) and a movable mold half (2) and a demolding device (5) for the moldings (38), which is connected to the movable mold half (2) and which consists of one or more grippers (17) guided in a pair of rails (6) by means of a holder plate (12), a mounting plate (4) for the pair of rails, a pinion (8) which is rotatably mounted on the mounting plate and can roll on a rack which can be firmly connected to the fixed mold half or to the mounting plate, and a kinematic chain which converts the rotary movement of the pinion into a rectilinear movement of the holder plate for the grippers, wherein, in order to form the kinematic chain, the pinion (8) is connected to a crank (22) and the latter in turn is connected, via a hinged connecting rod (23), with an oscillating crank (24) in the form of a rack for driving a further pinion, and the shaft of this pinion is coupled to a chain drive (26, 27), to whose transport chain (28) is fixed the holder plate (12) for the grippers (17).

2. An injection mold as claimed in claim 1, wherein the grippers (17) are mounted on a carrier arrangement (16) which is itself pivotably mounted on a connecting element (13), fixed to the holder plate (12), so that the moldings (38) can be placed on a conveyor belt (21) allotted to the demolding device (21), the pivot of the arrangement being connected to a controllable drive.

3. An injection mold as claimed in claim 2, wherein the pivot of the carrier arrangement (16) has a pinion (18) which can be driven by a hydraulic or pneumatic working cylinder (20) via a rack (19).

4. An injection mold as claimed in claims 1 and 2, wherein, in order to ensure that the carrier arrangement (16) for the grippers (17) is pivotable in two planes, the connecting element (13) is mounted for rotation about its central axis by means of a coaxial pivot (35) in a sleeve (34), the sleeve is connected, via a shaft (32) arranged at right angles and guided in a tube (31), with a rotary drive (30), the tube and rotary drive being fixed to the holder plate (12), and the pivot of the connecting element has a bevel gear (36) which, as the shaft rotates, can roll on a corresponding bevel gear (39) fixed to the adjacent end of the tube.

## Revendications

1. Machine à mouler par injection comportant un demimoule fixe (1) et un demi-moule mobile (2), ainsi qu'un dispositif de prélèvement (5) de la pièce moulée (38), demeurant en liaison avec le demi-moule mobile (2) et constitué par un ou plusieurs outils de prise guidés par une plaque support (12) dans un couple de coulisses (6), un plateau de montage (4) pour le couple de coulisses, une roue dentée (8) portée sur le plateau de montage de façon pouvoir tourner et à pouvoir se dérouler sur une crémaillère (9) qui peut être reliée solidement, à volonté, soit au demi-moule fixe, soit au plateau de montage, ainsi qu'une chaîne cinématique qui transforme le mouvement de rotation de la roue dentée en mouvement linéaire de la plaque support des outils de prise, caractérisée par le fait que, pour former la chaîne cinématique, la roue dentée (8) est reliée avec une manivelle (22) et celle-ci, à son tour, par l'intermédiaire d'une bielle (23) articulée, à une coulisse (24) agencée en crémaillère pour commander une autre roue dentée (25) et l'arbre de cette roue dentée est accouplé à un entraînement à chaîne (26, 27), à la chaîne transporteuse (28) duquel est fixée la plaque support (12) des outils de prise (17).

2. Machine à mouler selon la revendication 1, caractérisée par le fait que les outils de prise (17) sont montés sur un dispositif porteur (16) qui, pour déposer les pièces moulées (38) sur une bande transporteuse (21) associée au dispositif de prélèvement (5), est monté pivotant sur un élément de liaison (13) fixé à la plaque support (12) et dont l'axe de pivotement est relié à un mécanisme commandable.

3. Machine à mouler selon la revendication 2, caractérisée par le fait que l'axe de pivotement du dispositif porteur (16) comporte un pignon (18) qui peut être entraîné, par l'intermédiaire d'une crémaillère (19), par un vérin (20) hydraulique ou pneumatique.

4. Machine à mouler selon la revendication 1 ou 2, caractérisée par le fait que, pour permettre le pivotement du dispositif porteur (16) des outils de prise (17) dans deux plans, l'élément de liaison (13) est monté pivotant auour de son axe central dans une douille (34), au moyen d'un pivot (35) coaxial, la douille est reliée à un mécanisme de rotation (30) par un arbre (32) disposé à angle droit et logé dans un tube (31), le tube et le mécanisme de rotation étant fixés à la plaque support (12) et le pignon de l'élément de liaison comportant une roue conique (36) qui, par la rotation de l'arbre, peut rouler sur une roue conique (37) correspondante fixée à l'extrémité adjacente du tube.

FIG.1

0 083 766

FIG.2

0 083 766

FIG.3

9